Europäisches Patentamt

European Patent Office

Office européen des brevets

(19)

(11) Numéro de publication: **0 232 649 B1**

(12) **FASCICULE DE BREVET EUROPEEN**

(45) Date de publication de fascicule du brevet:
04.09.91

(51) Int. Cl.⁵: **A23C 19/05**, A23C 19/068

(21) Numéro de dépôt: **86402827.9**

(22) Date de dépôt: **16.12.86**

(54) Procédé de fabrication de fromages à pâte persillée.

(30) Priorité: **17.12.85 FR 8518687**

(43) Date de publication de la demande:
**19.08.87 Bulletin 87/34**

(45) Mention de la délivrance du brevet:
**04.09.91 Bulletin 91/36**

(84) Etats contractants désignés:
**DE FR GB IT**

(56) Documents cités:
**FR-A- 2 394 983**
**GB-A- 1 361 817**
**US-A- 2 982 654**

**JOURNAL OF DAIRY SCIENCE, vol. 64, no. 3, mars 1981, pages 523-525, Champaign, Illinois, US; C.L. HICKS et al.: "Equipment and procedure for manufacturing laboratory cheese curd"**

(73) Titulaire: **Roquette Frères**

**F-62136 Lestrem(FR)**

(72) Inventeur: **Bussière, Guy**
**9 rue Clément Ader**
**F-31520 Ramonville(FR)**
Inventeur: **Lablée, Jean**
**13 Grande Rue**
**F-25660 Mamirolle(FR)**

(74) Mandataire: **Koch, Gustave et al**
**Cabinet PLASSERAUD 84, rue d'Amsterdam**
**F-75009 Paris(FR)**

## Description

L'invention a pour objet un nouveau procédé de fabrication de fromages à pâte persillée.

Plus précisément, l'invention a pour objet un nouveau procédé de fabrication de fromages à pâte persillée selon lequel l'acidification du lait avant l'emprésurage est effectuée de façon contrôlée au moyen d'un agent acidogène.

Dans le cadre de l'invention, on entend par fromages à pâte persillée, conformément à la classification donnée dans l'ouvrage "Le Fromage", coordonné par André ECK, Technique et Documentation (Lavoisier), Paris (1984), notamment pages 220-221, en particulier les fromages dont l'intérieur est le siège d'un développement de moisissures de couleur foncée, de type Penicillium roqueforti, tels les fromages de type bleu (danois, de Bavière, de Gex, de Bresse, par exemple), fourmes, Gorgonzola, Stilton, Roquefort, et dont l'extrait sec est généralement de 45 à 55 %.

Il est rappelé que, de manière traditionnelle, la fabrication des fromages à pâte persillée comprend essentiellement les étapes suivantes :

-préparation du lait

Cette expression sous-entend les opérations éventuelles de blanchiment (homogénéisation ou action chimique) et de traitement thermique du lait cru et l'opération de maturation par action de ferments lactiques qui conduit à une acidification du lait jusqu'à une valuer de pH correspondant aux exigences requises pour l'étape ultérieure d'emprésurage, généralement comprise entre 6,0 et 6,5.

-emprésurage

Le lait maturé est additionné d'enzymes coagulantes.

-coagulation

Les caractéristiques du coagulum sont étroitement dépendantes de la cinétique de coagulation. Parmi les quatre paramètres de base régissant cette réaction physicochimique, qui sont : les enzymes coagulantes, le calcium soluble, la température et l'acidification, l'acidification générée par l'activité fermentaire doit évoluer progressivement durant toute la durée des phases de coagulation et d'égouttage.

-découpage-brassage
-moulage-égouttage

Ces opérations sont réalisées d'une façon telle que le fromage garde une structure ferme et aérée afin de permettre, au cours de l'affinage, le développement de la moisissure aérobie.

-démoulage-salage

A ce stade, le fromage doit avoir atteint une valeur de pH comprise entre 4,6 et 5,0, cette valeur étant liée au type de fromage à pâte persillée fabriqué.

-affinage-piquage

C'est l'ultime étape de la fabrication des fromages à pâte persillée qui consiste à conserver le fromage dans des conditions contrôlées de température et d'humidité, en vue de favoriser le développement des micro-organismes. Cette phase comporte un ou plusieurs piquages qui consistent à réaliser au travers du fromage des "cheminées d'aération" à l'aide d'aiguilles éventuellement ensemencées au préalable en spores de Penicillium qui agissent sur les propriétés organoleptiques (texture et flaveur) tout en permettant une action enzymatique contrôlée.

Par convention, dans ce qui suit, l'ensemble des étapes comprises entre la coagulation et l'affinage-piquage sera désigné par "étape de mise en forme".

Depuis longtemps, l'homme du métier recherche à optimiser et à industrialiser les procédés de fabrication de fromages, et notamment de ceux à pâte persillée.

Plus précisément, de nombreux travaux ont concerné la phase relative à la préparation du lait. C'est ainsi que l'on préfère aujourd'hui traiter thermiquement le lait cru en vue de la destruction de sa flore

2

banale afin d'améliorer la qualité bactériologique du lait et d'accroître sa conservabilité. Cette technique est maintenant largement usitée dans les ateliers de grand litrage, alors que l'emploi du lait cru est plutôt réservé aux ateliers de dimensions plus modestes et à la fabrication de types de fromages devant, pour des raisons d'appellation d'origine, impérativement être préparés à partir de lait cru (Roquefort par exemple).

Il reste néanmoins indéniable que la présence de ferments lactiques est indispensable dans les techniques fromagères. En effet, ces ferments lactiques jouent un rôle essentiel dans la phase d'acidification du lait conduisant à la formation du coagulum et dans la phase d'acidification du caillé jusqu'en fin d'égouttage, ainsi que dans le développement des propriétés organoleptiques du produit fini.

Dans le cas du lait cru, la flore lactique banale, naturellement présente dans le lait, assurait traditionnellement l'acidification, sans que puisse être exclue l'éventualité de renforcer son action par un apport complémentaire de cultures de ferments lactiques.

Dans le cas de lait traité thermiquement, il est nécessaire de l'acidifier par ensemencement en cultures de ferments lactiques notamment, selon des techniques appropriées.

Pour effectuer cette acidification, différentes variantes sont à l'heure actuelle proposées, essentiellement en raison du fait que le temps séparant le moment de l'arrivée du lait à l'usine de celui de sa mise en fabrication formagère (emprésurage) est très variable car il dépend entre autres des techniques de collecte, des aires géographiques de ramassage, de la période de l'année, du moment de la semaine.

Dans une première variante, la plus traditionnelle, la phase de préparation du lait comprend, outre le traitement thermique et la standardisation de la composition en matières grasses et protéiques, une étape de maturation dont la cinétique d'acidification est directement fonction de la quantité de levains lactiques ajoutés. Cette addition de ferments lactiques doit être modérée, afin de tendre vers une maîtrise de cette fermentation et de pouvoir effectuer l'emprésurage au pH requis.

Ce temps de maturation est très variable car les cadences de réception du lait à l'usine et les cadences de mise en oeuvre sont très discordantes, d'où des "temps de report" (temps tampon de stockage) variant de quelques heures à quelques dizaines d'heures.

Par ailleurs, le pH d'emprésurage doit être parfaitement respecté, selon le type de fromage à pâte persillée fabriqué. Aussi, compte tenu d'une phase de croissance quasi exponentielle de la flore lactique, le pH décroît trop rapidement, rendant extrêmement délicate la détermination du moment auquel doit se faire l'apport des enzymes coagulantes (emprésurage).

De plus, la maturation étant généralement effectuée pour des raisons économiques et pratiques dans des cuves ou "tanks" de très grande contenance, lors de la reprise du lait en vue de l'emprésurage, le contenu de chaque "tank" est réparti entre plusieurs bacs d'emprésurage de contenance nettement plus faible, d'où entre le premier et le dernier bac rempli et emprésuré, des temps de maturation différents, donc des pH à l'emprésurage différents. Ces raisons permettent de bien comprendre les difficultés rencontrées lors de la mécanisation de ces opérations.

Pour pallier à ces inconvénients, une autre variante a été proposée. Elle comporte, après les opérations habituelles de réception du lait et de premier traitement thermique, une phase de première maturation accélérée ou non par addition d'une dose plus ou moins forte de ferments lactiques. La maîtrise du pH est obtenue par un deuxième traitement thermique choisi de façon à détruire soit partiellement, soit la quasi totalité de la flore lactique ; la poursuite ultérieure de l'acidification est réalisée par la fraction résiduelle de ferments lactiques dans la première hypothèse, ou par un nouvel ajout de ferments lactiques dans la deuxième hypothèse.

Ce deuxième traitement thermique s'avère être une opération supplémentaire onéreuse et surtout très délicate dans la mesure où, au voisinage du pH d'emprésurage, la caséine du lait est devenue plus instable et plus sensible à la température, d'où un risque de "gratinage" (dépôt de résidus sur les parois des échangeurs thermiques). Cet inconvénient peut être limité en effectuant ce traitement thermique à un pH supérieur à environ 6,3, en ayant soin d'avoir un équipment assurant une $\Delta T$ (différence de température entre la paroi chaude et la paroi froide) minimale.

Or, il est bien connu de l'homme du métier que le pH à l'emprésurage conditionne la coagulation et les opérations ultérieures, ainsi que les caractéristiques du produit fini. L'existence de ce seuil à un pH voisin de 6,3 limite donc les possibilités technologiques de fabrication des fromages à pâte persillée.

Si la maturation est une opération quasi-indispensable, elle est cependant très variable en intensité : certains fromages (fourmes, Gorgonzola notamment) nécessitent des laits faiblement maturés alors que d'autres (bleu d'Auvergne par exemple) ont besoin de laits plus maturés.

Les apports de ferments lactiques exogènes, réalisés sous forme de préparation commerciale, peuvent être de différentes natures en fonction du but recherché, qui peut être uniquement l'acidification, mais qui souvent est plus complexe, par exemple : acidification, activité protéolytique, dégagement gazeux permet-

3

tant une dilation de l' "ouverture" des pâtes. Pour arriver au résultat recherché, on utilise le plus souvent des bactéries lactiques homofermentaires telles que bactéries mésophiles, thermophiles, streptocoques, lactobacilles, mais aussi des bactéries lactiques hétérofermentaires par exemple de type Leuconostoc.

Il convient à ce propos de noter que, dans le cas de l'emploi de ferments lactiques, les mésophiles acidifiants qui ont une phase de développement quasi-exponentielle doivent être employés à un taux très faible de sorte que le pH au démoulage ne descende pas au-dessous de la valeur optimale comprise entre 4,6 et 5,0. C'est là une contrainte supplémentaire dans le cas de l'utilisation de ferments lactiques au cours de la phase de maturation du lait dans la fabrication des fromages à pâte persillée.

Souvent, un ensemencement en spores de Penicillium est effectué dès le stade de la préparation du lait.

La préparation du lait comprend fréquemment une opération d'homogénéisation du lait ou de la seule crème séparée par centrifugation puis réintroduite dans la phase "lait", et une opération de blanchiment du lait ou de la crème à l'aide d'un agent blanchisseur autorisé tels ceux à base de chlorophylle.

En tout état de cause, quel que soit le mode de maturation proposé jusqu'à présent, le temps de maturation est très variable et difficilement maîtrisable, ce qui rend très difficile l'industrialisation des fabrications.

Et ce but n'a pas non plus été atteint par les techniques décrites, d'une part, dans le US-A-2 982 654 et, d'autre part, dans la publication "Journal of Dairy ` Science, vol. 64, no.3, mars 1981, pages 523-525, techniques qui proposent de remplacer, dans la fabrication de fromages très différents de ceux à pâte persillée, les ferments acidifiants par un agent acidogène.

Il y a donc un intérêt certain à la mise au point d'un nouveau procédé rendant possible d'éliminer les inconvénients susdécrits, inhérents à l'opération de préparation du lait en vue de la fabrication de fromages à pâte persillée.

La Société Demanderesse a mis au point un nouveau procédé de fabrication de fromages à pâte persillée permettant la maîtrise de l'étape de préparation du lait, favorisant ainsi l'automatisation des lignes de fabrication, et ceci sans que les propriétés organoleptiques des produits finis se trouvent modifiées de façon désavantageuse.

Ce nouveau procédé de fabrication de fromages à pâte persillée est caractérisé par le fait que le lait est acidifié de façon contrôlée, notamment à partir de sa valeur de pH initiale à la réception, comprise habituellement entre 6,6 et 6,8, jusqu'à une valeur de pH comprise entre 6,0 et 6,6, de préférence entre 6,0 et environ 6,5, à l'aide d'un agent acidogène.

La Demanderesse a en effet constaté que, de façon surprenante, l'utilisation d'un agent acidogène permettait d'atteindre de façon simple et fiable, des pH avant emprésurage relativement bas, et ceci dans un temps prédéterminé et sans affecter de façon défavorable les étapes ultérieures de la fabrication du fromage à pâte persillée et les caractères organoleptiques des produits obtenus.

Le lait, matière première servant à la fabrication des fromages à pâte persillée selon la présente invention, peut être n'importe quel lait ou mélange de laits de toute origine, en particulier ceux mis en oeuvre habituellement dans la fabrication des fromages à pâte persillée selon l'art antérieur.

Par agent acidogène, on entend ici toute substance neutre du point de vue du pH et capable, après solubilisation en milieu aqueux, de se transformer progressivement en acide.

Parmi les substances de ce type, figurent certains anhydrides d'acides, les lactides et notamment ceux à bas point de fusion de l'acide lactique, les lactones telles que les gluconolactones et les glucoheptonolactones, et similaires et/ou leurs mélanges.

Ces définitions étant données, l'invention a pour objet un procédé de fabrication de fromages à pâte persillée caractérisé par le fait que:
- l'on mesure le pH initial et la température initiale du lait à partir duquel doit être préparé le fromage à pâte persillée,
- l'on sélectionne un agent acidogène dans le groupe comprenant les gluconolactones et les glucoheptonolactones,
- l'on détermine la période de temps à l'intérieur de laquelle le pH du lait sera amené de son pH initial à un pH d'emprésurage, le pH d'emprésurage étant compris entre 6,0 et 6,6, ce pH étant le pH d'emprésurage du type de fromage à pâte persillée devant être fabriqué, ainsi que la quantité d'agent acidogène nécessaire pour amener le pH initial du lait jusqu'au susdit pH d'emprésurage, lesdites période de temps et quantité d'agent acidogène étant déterminées à partir de la connaissance de la cinétique de transformation de l'agent acidogène à ladite température du lait,
- l'on amène le pH du lait au pH d'emprésurage par addition de ladite quantité d'agent acidogène,
- l'on emprésure le lait ainsi acidifié par addition d'enzymes coagulantes,
- l'on coagule le lait emprésuré et l'on procède aux étapes de

4

- découpage-brassage,
- moulage-égouttage,
- démoulage-salage et
- affinage-piquage.

Il est bien connu que la cinétique de transformation d'un agent acidogène en acide est strictement dépendante de la température du milieu aqueux dans lequel il est solubilisé. En conséquence, à partir des trois paramètres de base du lait utilisé dans l'industrie fromagère qui sont :
- le pH initial du lait,
- le pH requis pour l'emprésurage,
- la température du lait,
le technicien peut déterminer avec précision la dose d'agent acidogène à incorporer et le temps requis pour atteindre le pH d'emprésurage voulu, connaissant avec certitude la cinétique d'hydrolyse de l'agent acidogène.

Cette amélioration apportée par l'addition d'agent acidogène au moment de la maturation conduit donc à une parfaite et totale maîtrise de la phase de préparation du lait, améliorant ainsi les conditions d'automatisation des lignes de production de fromages à pâte persillée.

Cet apport d'agent acidogène peut être effectué indifféremment sous la forme de poudre ou sous la forme de solution.

Dans le cas où l'agent acidogène est ajouté sous la forme pulvérulente, sa dispersion dans le lait et sa solubilisation sont assurées par tout moyen d'agitation approprié.

Dans le cas où il est préféré d'apporter cet agent acidogène sous la forme d'une solution, celle-ci est avantageusement préparée au moment de l'emploi afin de limiter autant que faire se peut l'hydrolyse de l'agent acidogène. En effet si, de par cette hydrolyse, la solution d'agent acidogène présentait une trop grande acidité, les inconvénients bien connus liés à l'emploi direct d'acides dans la production industrielle de fromages à pâte persillée apparaîtraient de nouveau.

Dans la pratique, et compte tenu des particularités propres à chaque ligne de fabrication de fromages à pâte persillée, le technicien, connaissant la cinétique d'hydrolyse de l'agent acidogène employé, déterminera le meilleur moment pour l'introduire.

A titre indicatif, l'agent acidogène pourra être introduit :
- dans le lait cru, ou
- dans le lait après le traitement thermique éventuel.

Il est bien entendu que d'autres variantes pourraient être envisagées.

Dans tous les cas, il conviendra, pour déterminer le moment auquel l'agent acidogène doit être introduit, de tenir compte de sa cinétique d'hydrolyse à la température du lait au moment de l'introduction et jusqu'à l'emprésurage.

Dans certains cas, on préférera choisir une dose d'agent acidogène telle que, après hydrolyse complète de cet agent, le lait soit au pH requis pour l'emprésurage. dans d'autres cas, cette dose pourra être supérieure, de sorte que l'hydrolyse de l'agent acidogène au pH déterminé pour l'emprésurage soit incomplète, favorisant ainsi l'acidification ultérieure du lait emprésuré.

Ainsi une dose appropriée d'agent acidogène peut permettre une maîtrise de l'acidification au cours des étapes de fabrication qui suivent l'emprésurage, notamment en assurant une baisse de pH reproductible de l'emprésurage à la coagulation et ensuite au moins jusqu'au décaillage.

Cette acidification contrôlée à l'emprésurage et au cours des étapes qui suivent l'emprésurage est avantageusement pratiquée quand les ferments employés pour l'acidification ultérieure du caillé ont un temps de latence important, notamment dans le cas d'emploi de ferments pour l'ensemencement direct du lait, utilisés sous forme congelée ou lyophilisée.

De la même façon, la société demanderesse a observé que l'acidification contrôlée à l'emprésurage et au cours des étapes qui suivent l'emprésurage, permet , dans certaines conditions, une réduction des temps de fabrication.

Outre les avantages techniques liés à la maîtrise du pH durant la maturation et de ce fait à l'amélioration des possibilités d'automatiser les lignes de production de fromages à pâte persillée, la Société Demanderesse a, comme il a été dit plus haut, mis en évidence le fait que le remplacement des ferments lactiques par un agent acidogène lors de la phase de maturation du lait était, de façon inattendue, sans incidence significative sur les caractéristiques de texture et de goût des fromages à pâte persillée affinés.

Le procédé selon l'invention n'implique toutefois pas pour autant l'élimination des ferments lactiques ou de tout autre ferment. Il est en effet possible d'introduire des ferments lactiques ou tout autre micro-organisme au cours de la mise en oeuvre du procédé selon l'invention en une quantité et à un moment qui seront fonction des objectifs technologiques ou qualitatifs recherchés tels que, par exemple, des caractères organoleptiques particuliers.

Ainsi, des ferments lactiques, en particulier des bactéries autres que les mésophiles (thermophiles, hétérofermentaires) peuvent être apportés, même au moment de la maturation. En revanche, si un ensemencement en bactéries mésophiles est effectué dès la maturation, il faut que leur quantité soit suffisamment faible pour ne pas influencer de façon significative la cinétique de diminution du pH, afin de ne pas retrouver les inconvénients de l'art antérieur. En revanche, la quantité de ferments lactiques mésophiles pourra être plus importante si on les apporte au moment de l'emprésurage.

L'invention permettant d'éliminer la nécessité du traitement thermique en cours ou en fin de maturation du lait, rend possible l'abaissement du pH à l'emprésurage à une valeur inférieure à 6,3, ce qui permet d'une part une plus large gamme de variations au niveau de la texture et du goût des fromages à pâte persillée affinés et d'autre part de diminuer la dose d'enzymes coagulantes, ce qui est avantageux au plan économique.

Les agents acidogènes utilisés de préférence dans le cadre de l'invention sont les gluconolactones et les glucoheptonolactones, de préférence encore les gluconolactones et notamment la gluconodeltalactone (GDL).

Outre les avantages précités, l'excellente solubilité dans les milieux aqueux de la GDL et sa cinétique d'hydrolyse aux températures traditionnellement rencontrées lors de la maturation du lait pour la fabrication des fromages à pâte persillée, la rendent parfaitement adaptée aux exigences propres à la fabrication de ces fromages.

Avantageusement, la quantité d'agent acidogène mise en oeuvre dans le cadre de l'invention est de 2 à 2000 g/hl de lait. De préférence, elle est comprise entre 5 et 1000 g/hl de lait et, de préférence encore, entre 10 et 500 g/hl de lait, selon l'agent acidogène utilisé.

Ainsi, dans le cas particulier où l'agent acidogène est la GDL, la quantité mise en oeuvre est avantageusement de 5 à 500 g/hl de lait. De préférence, elle est comprise entre 10 et 300 g/hl de lait et, de préférence encore, entre 20 et 200 g/hl de lait.

L'invention sera mieux comprise à l'aide des exemples qui suivent et qui comportent la description de modes de réalisation avantageux. Tous ces exemples ont été réalisés par l'I.T.I.L. dans les locaux de l'Ecole Nationale d'Industrie Laitière de MAMIROLLE - BESANCON (France).

Exemples de fabrication de fromages à pâte persillée de type "bleu".
EXEMPLE 1 - Témoin

De la production à la ferme jusqu'à la fin de la préparation, le lait est soumis aux conditions industrielles habituelles à l'établissement où cet essai est réalisé, à savoir : réceptionné la veille au soir, le lait est maintenu dans une cuve de "report" à 6°C jusqu'au lendemain matin ; il subit alors le traitement de préparation suivant.

210 l de lait sont préparés dans les conditions industrielles normales : standardisation en composition à 34 g/l de matière grasse par mélange de 21 l de lait écrémé et de 189 l de lait entier, ces deux fractions subissant successivement un traitement thermique sur échangeur à plaques à 72°C durant 40 secondes avec une température de sortie de 38°C. Dans la pratique industrielle, la fraction de lait écrémé est préparée en premier : le lait entier subit un premier réchauffage jusqu'à 50°C dans l'échangeur à plaques, puis il passe dans l'écrémeuse ; le lait écrémé revient alors dans l'échangeur où il subit la fin du cycle thermique : 72°C durant 40 secondes puis refroidissement jusqu'à 38°C. 21 l de ce lait écrémé traité thermiquement sont amenés dans la cuve de maturation.

Le traitement thermique du lait entier est alors effectué et 189 l de ce lait à 38°C sont mélangés aux 21 l de lait écrémé. On obtient ainsi 210 1 de lait standardisé et traité thermiquement.

Le pH du lait est alors mesuré sur la fraction de lait entier au moment de son introduction dans trois bassines de 100 l, à raison de 70 l par bassine. Il est de 6,60 ±0,02.

Un apport de sel de calcium soluble est ensuite réalisé à raison de 42 ml d'une solution comportant 520 g/l de chlorure de calcium.

L'ensemencement est alors effectué par apport de :
- ferments lactiques mésophiles mis en oeuvre selon les conditions suivantes : une préparation concentrée et congelée, commercialisée par les Laboratoires MILES - Division Marshall (rue des Longs Réages - 28230 EPERNON - France), est cultivée sur le milieu nutritif Marstar, commercialisé par ces mêmes Laboratoires, en appliquant strictement les conditions de préparation préconisées par lesdits Laboratoires. O,4 % de cette culture (exprimé en volume par rapport au lait) soit 0,84 l, est ensuite mélangé au lait ;

- ferments lactiques de type streptocoques thermophiles préparés au préalable comme suit : une préparation commerciale, concentrée, congelée, provenant des Laboratoires MILES - Division Marshall, est cultivée sur le milieu nutritif commercialisé sous la dénomination 412 A par les Laboratoires MILES en appliquant strictement les conditions de préparation préconisées par ces Laboratoires. 1,5 % de cette culture, soit 3, 15 l, sont mélangés au lait ;
- ferments lactiques thermophiles constitués par un mélange d'une préparation lyophilisée de streptocoques thermophiles (même nature et même provenance que ci-dessus) et d'une préparation lyophilisée de Lactobacillus helveticus et lactis provenant de la Société LACTO-LABO (B.P. 10 - 23 rue du Collège - 86220 DANGE-SAINT-ROMAIN - France), cultivé sur lait écrémé stérilisé à l'autoclave dans des conditions choisies telles que, après incubation, la culture contienne approximativement 50 % de streptocoques et 50 % de Lactobacillus (estimation faite par examen microscopique). 0,1% de cette culture, soit 0,21 l, est mélangé au lait ;
- spores de Penicillium roqueforti et Geotrichum candidum commercialisées par la même Société LACTO-LABO, apportées à raison de 100 millions de spores de chacun des deux.

Le temps permettant d'arriver au pH désiré d'environ 6,20 est de l'ordre de 70 minutes.

Dans le cas présent :
- pH = 6,20 ± 0,02
- température : 35° C.

L'emprésurage de chaque bassine de 70 l est assuré par apport de 0,15 ml/l de lait d'une préparation commerciale d'enzymes coagulantes renfermant 520 mg de chymosine par litre.

Le temps de prise, c'est-à-dire le temps entre l'instant où l'enzyme est ajoutée et celui où l'on constate par examen manuel le début de la coagulation, est de 12 minutes en moyenne et de 13 minutes dans le cas de cet essai. Le lait est encore laissé à coaguler, selon les conditions traditionnelles, durant un temps égal à celui du temps de prise.

Le coagulum est découpé dans sa bassine à l'aide d'un appareil à fils à mouvement manuel. Après 12 minutes de repos, un brassage du caillé est effectué, celui-ci est renouvelé une à trois fois avec un temps de repos égal entre deux passages consécutifs, selon l'extrait sec désiré.

Le contenu de chaque bassine est versé sur une toile de type "gruyère" et laissé à égoutter durant deux minutes dans le fond d'une bassine vide. A la suite de quoi le caillé sans sérum provenant de chaque bassine de 70 l est réparti dans 21 moules carrés, perforés, de 10 cm de côté.

L'égouttage est effectué dans un local à 25° C, les moules subissant quatre retournements: immédiatement après moulage, après 30 minutes, 3 heures et 8 heures.

Les fromages sont démoulés après 20 heures. Leur pH est de 4,70 ± 0,02.

Le saumurage permet d'ajuster les taux de sel (chlorure de sodium) des fromages par trempage durant 45 minutes dans une saumure, comportant 170 g de sel/l de saumure.

Ressuyage:

Sortis de la saumure et égouttés, les fromages sont laissés durant 24 heures dans un local ventilé à 12-13° C.

Affinage:

Les fromages sont placés sur claies puis mis en local climatisé à 10° C, avec une humidité relative de 95 %. Ils sont laissés dans ce local durant une vingtaine de jours. Deux piquages accompagnés du retournement des fromages sont réalisés après 4 jours et 10 jours de la façon suivante : un dispositif comportant 20 aiguilles de 2,5 mm de diamètre permet de perforer de part en part chacun des fromages, le but de cette opération étant de créer des "cheminées d'aération" afin de favoriser le développement des moisissures internes.

En fin d'affinage, on obtient des fromages de type bleu, comportant dans toute leur masse un développement homogène de moisissures bleues typiques.

EXEMPLE 2 - selon l'invention

Il est identique à l'exemple 1, si ce n'est que :
- dès l'introduction du lait dans les bassines, on apporte, par bassine de 70 l, 112 g de gluconodeltalactone (GDL), commercialisée par la Demanderesse, soit 160 g/hl. Une agitation manuelle permet la solubilisation complète des cristaux de GDL.

- les ferments lactiques mésophiles sont ajoutés à l'emprésurage.

La dose de gluconodeltalactone est définie de façon à obtenir un pH à l'emprésurage de 6,20 ± 0,02, après 10 minutes de maturation, donc plus rapidement, et de façon plus régulière, que dans l'exemple 1. L'emploi de la GDL permet d'atteindre les valeurs optimales, tant à l'emprésurage qu'au démoulage.

## TABLEAU RECAPITULATIF

## Fabrication de fromages à pâte persillée

|  | Exemple 1 | Exemple 2 |
|---|---|---|
| pH initial du lait (±0,02) | 6,60 | 6,60 |
| GDL (g/hl) | - | 160 |
| Ferments lactiques mésophiles (à la maturation) (%) | 0,4 | - |
| Streptocoques thermophiles (%) | 1,5 | 1,5 |
| Ferments lactiques mixtes thermophiles (%) | 0,1 | 0,1 |
| Temps de maturation (mn) | 70 | 10 |
| pH à l'emprésurage (± 0,02) | 6,20 | 6,20 |
| Taux d'enzymes coagulantes (ml/l) | 0,15 | 0,15 |
| Ferments lactiques mésophiles (à l'emprésurage) (%) | - | 0,4 |
| Temps de prise (mn) | 13 | 10,5 |
| pH au démoulage (± 0,02) | 4,72 | 4,75 |

Les fromages obtenus selon les exemples 1 et 2 présentent des caractères organoleptiques similaires (texture, flaveur, aspect).

**Revendications**

1. Procédé pour la fabrication de fromages à pâte persillée , caractérisé par le fait que:
   - l'on mesure le pH initial et la température initiale du lait à partir duquel doit être préparé le fromage à pâte persillée,
   - l'on sélectionne un agent acidogène dans le groupe comprenant les gluconolactones et les glucoheptonolactones,
   - l'on détermine la période de temps à l'intérieur de laquelle le pH du lait sera amené de son pH initial à un pH d'emprésurage, le pH d'emprésurage étant compris entre 6,0 et 6,6, ce pH étant le pH d'emprésurage du type de fromage à pâte persillée devant être fabriqué, ainsi que la quantité d'agent acidogène nécessaire pour amener le pH initial du lait jusqu'au susdit pH d'emprésurage, lesdites période de temps et quantité d'agent acidogène étant déterminées à partir de la connaissance de la cinétique de transformation de l'agent acidogène à ladite température du lait,
   - l'on amène le pH du lait au pH d'emprésurage par addition de ladite quantité d'agent acidogène,
   - l'on emprésure le lait ainsi acidifié par addition d'enzymes coagulantes,
   - l'on coagule le lait emprésuré et l'on procède aux étapes de
     - découpage-brassage,
     - moulage-égouttage,
     - démoulage-salage et
     - affinage-piquage.

2. Procédé selon la revendication 1, caractérisé par le fait qu'il comporte en plus une étape d'addition de

## EP 0 232 649 B1

ferments lactiques au lait, préalablement à l'emprésurage, lesdits ferments lactiques étant ajoutés dans un but organoleptique et textural en une quantité suffisamment faible pour ne pas influencer de façon significative la cinétique de diminution du pH.

## Claims

1. Process for manufacturing marbled cheeses characterized by the fact that:
   - the initial pH and the temperature of the milk from which the marbled cheese is to be prepared are measured,
   - an acidogen is selected from the group comprising gluconolactones and glucoheptonolactones,
   - the period of time within which the pH of the milk will be brought from the initial pH to a renneting pH is selected, said renneting pH being comprised between 6.0 and 6.6, said pH being the required renneting pH for the type of marbled cheese being manufactured, as well as the amount of acidogen required to bring the initial pH of the milk to the said renneting pH, said period of time and said amount of acidogen being determined based on the knowledge of the kinetics of transformation of the acidogen at said temperature of the milk,
   - the pH of the milk is brought to the renneting pH by adding of the said amount of acidogen,
   - the milk thus acidified is renneted by adding coagulating enzymes,
   - the renneted milk is coagulated and it is proceeded to the successive steps of
     - cutting up-grinding,
     - moulding-draining,
     - taking from the mould-salting and
     - ripening-needling.

2. Process according to claim 1, characterized by the fact that it further comprises the step of adding lactic ferments to the milk prior to renneting, said lactic ferments being added for organoleptic and textural purposes in an amount sufficiently low for not influencing significantly the kinetics of the decrease of said pH.

## Patentansprüche

1. Verfahren zur Herstellung von Blauschimmelkäse, dadurch gekennzeichnet, daß
   - man den Anfangs-pH und die Anfangstemperatur der Milch, aus der der Blauschimmelkäse hergestellt werden soll, bestimmt,
   - man ein säurebildendes Mittel aus der Gruppe der Gluconolactone und der Glucoheptonolactone auswählt,
   - man die Zeitdauer innerhalb der der pH der Milch von seinem Anfangs-pH auf einen pH des Labzusatzes gebracht sein wird, wobei der pH des Labzusatzes zwischen 6,0 und 6,6 liegt, und dieser pH der pH des Labzusatzes vom Typ des herzustellenden Blauschimmelkäses ist, sowie die Menge an säurebildendem Mittel, die erforderlich ist, um den Anfangs-pH der Milch bis zu dem gennanten pH des Labzusatzes zu bringen, bestimmt, wobei die Zeitdauer und die Menge an säurebildendem Mittel auf Basis der Kenntnis der Kinetik der Umwandlung des säurebildenden Mittels bei der Temperatur der Milch bestimmt werden,
   - man den pH der Milch auf den pH des Labzusatzes durch Zugabe der genannten Menge an säurebildendem Mittel bringt,
   - man der so angesäuerten Milch durch Zusatz koagulierender Enzyme Lab zusetzt,
   - man die mit Lab versetzte Milch koaguliert und die Verfahrensschritte
     - Zerschneiden-Vermengen,
     - Formen-Abtropfenlassen
     - Entformen-Salzen
     - Affinieren-Lochbildung
   vornimmt.

2. Verfahren gemäß Anspruch 1, dadurch gekennzeichnet, daß es außerdem eine Stufe des Zusatzes von Milchsäurefermenten zu der Milch vor dem Labzusatz umfaßt, wobei die Milchsäurefermente zu organoleptischen und TexturZwecken in hinreichend geringer Menge zugesetzt werden, damit die Kinetik der pH-Verminderung nicht signifikant beeinflußt wird.